# DEMANDE DE BREVET EUROPEEN

(11) **EP 0 677 814 A1**
(43) Date de publication de la demande: **18.10.1995**
(21) Numéro de dépôt: 95420089.5
(22) Date de dépôt: 10.04.1995
(51) Int. Cl.: G06K 7/06

(54) **Cadre de contact pour lecteur de carte à puce**

(30) Priorité: 12.04.1994 FR 9404559
(71) Demandeur: ETABLISSEMENTS JEAN COTTERLAZ (soiété anonyme), F-74460 Marnaz (FR)
(72) Inventeur: Cotterlaz, Pierre, F-74300 Cluses (FR); Grange, Pierre, F-74460 Marnaz (FR)
(74) Mandataire: Poncet, Jean-François

(57) **Abrégé**

Le cadre de contact (8) selon l'invention comprend une structure de cadre en matière isolante à deux longerons et deux traverses (17,18) entourant des fenêtres (19,20) dans lesquelles sont logées des lames conductrices de contact (23,27). Chaque lame de contact (23) comprend une portion intermédiaire (24) noyée dans une traverse (17) entre une portion extérieure d'extrémité (25) de connexion électrique et une portion intérieure (26) comprenant un premier segment (28) se développant dans une première direction et se raccordant par un pliage (29) à un second segment (30) terminé par une extrémité profilée de contact (13) qui dépasse de la face principale de guidage (9). La carte à puce repousse élastiquement les portions intérieures (26) de lames de contact, les extrémités profilées de contact (13,14) assurant le contact électrique avec des plages conductrices correspondantes de la carte à puce. L'agencement particulier des portions intérieures (26) de lames de contact permet de réduire la longueur du cadre de contact (8).

## Description

La présente invention concerne les lecteurs de cartes à puce, que l'on utilise par exemple dans un poste téléphonique à prépaiement par carte, ou dans un appareil de lecture et vérification de code de carte de crédit, et que l'on peut utiliser également dans les radiotéléphones et d'autres appareils portatifs divers.

Les cartes à puce les plus couramment utilisées comportent un support plat au format d'une carte de crédit, en une matière isolante telle qu'une matière plastique, et dans lequel est implanté au moins un circuit intégré connecté à des plages conductrices de connexion accessibles sur l'une des deux faces du support.

Dans le lecteur de carte à puce, la carte à puce est guidée par des moyens de guidage et de positionnement de carte, et des éléments de contact assurent le raccordement électrique d'un circuit électronique actif avec les plages conductrices de connexion de la carte à puce.

Dans certains lecteurs de carte à puce actuellement en service, les éléments de contact sont assemblés dans un composant unitaire appelé cadre de contact, comprenant au moins deux longerons latéraux et deux traverses extrêmes définissant une structure de cadre en matière isolante présentant une face principale de guidage généralement plane et une seconde face de cadre généralement plane opposée à la face principale de guidage. La structure de cadre entoure deux fenêtres séparées par une traverse intermédiaire et dans lesquelles sont logées deux rangées respectives opposées de lames parallèles conductrices de contact solidaires du cadre de contact. Chaque lame de contact comporte une portion intérieure de lame de contact logée dans la fenêtre et comportant une portion profilée de contact. Les portions profilées de contact font saillie au-delà de la face principale de guidage, et sont agencées pour assurer le raccordement électrique avec les plages conductrices de la carte à puce.

Lors de la lecture d'une carte à puce, une extrémité profilée de lame de contact vient en appui et est repoussée dans la fenêtre correspondante par l'une des plages conductrices correspondante de la carte à puce elle-même en appui contre ou à proximité immédiate de la face principale de guidage du cadre de contact. La longueur de portion intérieure de lame de contact, se trouvant en porte-à-faux dans la fenêtre à partir de son extrémité solidarisée au cadre de contact, peut fléchir élastiquement. La force d'appui élastique de l'extrémité profilée de contact sur la plage conductrice correspondante de carte à puce doit être obtenue de façon relativement précise, c'est-à-dire avec des tolérances relativement étroites. Si cette force est trop faible, il en résulte des problèmes de résistance de contact. Si cette force est trop grande, il en résulte des problèmes d'usure des éléments de contact et des cartes.

La présence d'une longueur suffisante de portion intérieure de lame de contact est ainsi nécessaire, pour garantir la présence d'une flexion élastique de la lame de contact lors du positionnement de la carte à puce à contrôler.

Dans le dispositif décrit dans le document EP-A-0 520 080, les lames de contact sont fixées par leur première extrémité à la traverse intermédiaire, et viennent en appui sur des pistes d'un circuit imprimé pour leur connexion électrique. Leurs portions intérieures comprennent un premier segment inférieur horizontal, se raccordant par un pliage à un second segment supérieur élastiquement flexible qui assure le maintien d'un contact électrique satisfaisant. Les extrémités libres des lames de contact sont orientées vers les traverses extrêmes et, au repos, elles dépassent au-dessus de la face supérieure du cadre de contact. Ainsi, dans ce dispositif, seul le segment supérieur de lame de contact assure la flexion élastique, de sorte que sa longueur doit être suffisante pour garantir une flexion appropriée de la lame de contact lors du positionnement de la carte à puce. Il en résulte un encombrement non négligeable du cadre de contact. En outre, la disposition décrite n'est pas appropriée pour faciliter des soudures de connexion des lames de contact, elle présente des défauts de tenue mécanique des lames de contact simplement engagées dans des fentes du cadre, et elle nécessite la présence d'un mécanisme basculant complexe pour présenter la carte à puce sur les contacts sans glissement.

Dans la disposition plus traditionnelle illustrée par exemple dans les documents FR-A-2 623 313 et EP-A-0 474 519, les portions intérieures de lame de contact sont constituées d'un segment unique généralement rectiligne s'étendant depuis l'une des traverses extrêmes du cadre jusqu'à l'extrémité profilée de contact de lame située au voisinage de la traverse intermédiaire de cadre, en traversant longitudinalement la fenêtre correspondante.

Il en résulte un encombrement non négligeable du cadre de contact, dont la longueur comprend deux fois la section transversale d'une traverse d'extrémité, augmentée de l'écartement entre les extrémités profilées de contact opposées qui est égal au pas imposé par la carte à puce, auquel s'ajoutent les deux longueurs des portions intérieures flexibles des lames de contact opposées. Dans les cadres de contact actuels, cette longueur est de 22 à 24 mm environ.

Le problème proposé par la présente invention est de réduire la surface occupée par le cadre de contact, et en particulier sa longueur entre les deux traverses extrêmes, sans toutefois affecter les qualités des contacts électriques réalisés entre les plages conductrices de la carte à puce et les extrémités profilées de contact du cadre de contact.

Un autre objet de l'invention est de réaliser un tel cadre de contact miniaturisé sans augmenter sensiblement son coût de production, en facilitant sa connexion par soudures, et en permettant l'introduction des cartes à puce par glissement.

Pour atteindre ces objets ainsi que d'autres, le cadre de contact selon l'invention pour lecteur de carte à puce, comprend, de façon connue, au moins deux longerons latéraux et deux traverses extrêmes définissant une structure de cadre en matière isolante, présentant une face principale de guidage et une seconde face opposée, et entourant au moins une fenêtre dans laquelle sont logées deux rangées opposées de lames parallèles conductrices de contact solidaires du cadre de contact, les lames de contact ayant une portion intérieure de lame de contact logée dans la fenêtre et comportant une portion profilée de contact, les portions profilées de contact faisant saillie au-delà de la face principale de guidage et étant agencées pour assurer le raccordement électrique avec des plages conductrices de la carte à puce, les portions intérieures de lame de contact comprenant un premier segment de lame de contact généralement approximativement parallèle au plan moyen du cadre de contact et à l'écart de la face principale de guidage, se développant dans une première direction à partir de leur extrémité solidaire du cadre de contact, et se raccordant par un pliage à un second segment de lame de contact, plus proche de la face principale de guidage et se développant dans la direction opposée à ladite première direction jusqu'à ladite portion profilée de contact. Selon l'invention :
- chaque lame de contact a une portion intermédiaire de lame de contact noyée dans une traverse extrême de cadre de contact, entre la portion intérieure de lame de contact et une portion extérieure d'extrémité de lame de contact dépassant à l'extérieur de la traverse extrême pour la connexion électrique du cadre de contact,
- l'un et l'autre des premier et second segments de lame de contact sont élastiquement flexibles perpendiculairement au plan du cadre de contact,
- le premier segment de lame de contact est disposé, au repos, à une distance appropriée de la seconde face de cadre de contact de façon que, en position de lecture d'une carte à puce, le premier segment de lame de contact puisse librement fléchir tout en restant à l'intérieur de la fenêtre correspondante de cadre, en retrait de ladite seconde face de cadre de contact,
- les extrémités libres des seconds segments de lame de contact restent en permanence à l'intérieur de la fenêtre correspondante, en retrait de la face principale de guidage.

Le cadre de contact peut comprendre une traverse intermédiaire séparant deux lumières ou deux séries de lumières contenant chacune l'une des deux rangées de lames de contact. La traverse intermédiaire présente avantageusement une section réduite, pour laisser la place des pliages opposés de lames de contact, qui sont espacés les uns des autres d'une distance inférieure au pas imposé par les plages conductrices de la carte à puce.

La traverse intermédiaire sert au guidage de la carte, et peut également constituer une zone d'aspiration pour une pipette de manipulateur, utile tant lors de la fabrication du cadre de contact que lors de son montage ultérieur.

La traverse intermédiaire pourrait être supprimée. Toutefois, pour conserver une fonction de guidage de la carte à puce et/ou de manipulation, on peut conserver une traverse intermédiaire présentant, dans sa portion adjacente à la face principale d'appui, une largeur appropriée pour ce guidage de carte à puce entre les deux lumières ou séries de lumières, et, dans sa portion plus éloignée de la face principale d'appui, une largeur réduite ou nulle pour le logement des pliages.

D'autres objets, caractéristiques et avantages de la présente invention ressortiront de la description suivante de modes de réalisation particuliers, faite en relation avec les figures jointes, parmi lesquelles:
- la figure 1 illustre, en coupe longitudinale, une structure possible de lecteur de carte à puce muni d'un cadre de contact ;
- la figure 2 est une vue de côté en coupe longitudinale d'un cadre de contact selon un premier mode de réalisation de la présente invention
- la figure 3 est une vue de dessus du cadre de contact de la figure 2 ;
- la figure 4 est une vue de côté en coupe longitudinale d'un cadre de contact selon un second mode de réalisation de la présente invention ; et
- la figure 5 illustre, en vue de dessus, une carte à puce montrant les plages conductrices.

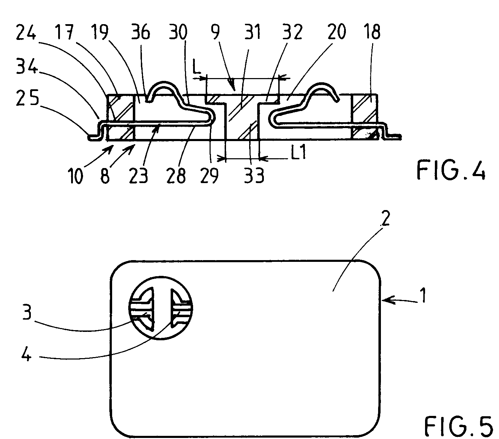

Comme le représente schématiquement la figure 5, une carte à puce 1 se compose d'un support isolant 2 plat sur une face duquel apparaissent des plages conductrices telles que les plages 3 et 4 connectées intérieurement à un circuit intégré.

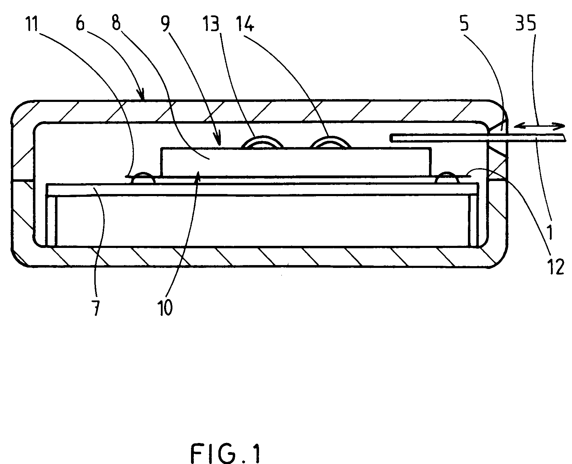

Dans un lecteur de carte à puce tel qu'illustré sur la figure 1, la carte à puce 1 est introduite par glissement par une ouverture 5 en forme de fente dans un boîtier 6 contenant généralement un circuit imprimé 7 portant un cadre de contact 8. Le cadre de contact 8, réalisé en matière isolante, présente une face principale de guidage 9 et une seconde face 10 de cadre de contact opposée à la face principale de guidage 9.

Le cadre de contact 8 comprend des lames de contact, élastiquement flexibles, dont une première extrémité 11 constitue des broches de connexion de cadre de contact telles que les broches 11 et 12, qui sont soudées sur des pistes conductrices correspondantes du circuit imprimé 7. A leur autre extrémité, les lames conductrices de contact comportent des portions profilées de contact respectives, telles que les portions 13 et 14, qui font saillie au-delà de la face principale de guidage 9 et qui sont agencées pour assurer le raccordement électrique avec les plages conductrices telles que les plages 3 et 4 de la carte à puce 1.

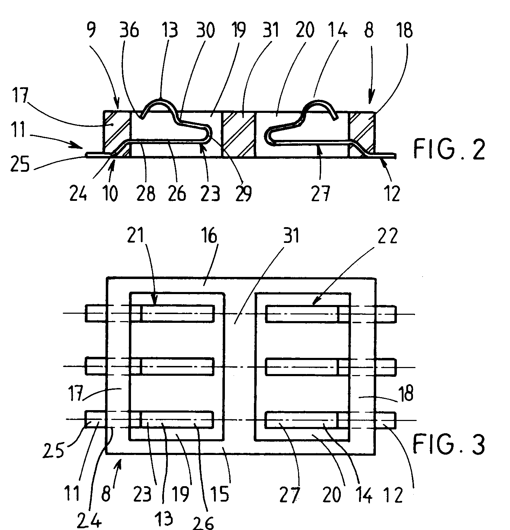

Comme illustré sur les figures 2 à 4, le cadre de contact 8 selon l'invention comprend au moins deux longerons latéraux 15 et 16 et deux traverses extrêmes 17 et 18 définissant une structure de cadre en matière isolante, généralement plat entre la face principale de guidage 9 et la seconde face 10 opposée. Le cadre en matière isolante entoure au moins une fenêtre, par exemple deux fenêtres 19 et 20 dans les modes de réalisation représentés, dans laquelle sont logées deux rangées opposées respectives 21 et 22 de lames parallèles conductrices de contact. En variante, les fenêtres 19 et 20 sont remplacées par deux séries de fenêtres contenant chacune une lame de contact, en prévoyant un longeron entre chaque lame de contact.

Chaque lame de contact telle que la lame 23 comprend une portion intermédiaire 24 de lame de contact, noyée dans une traverse extrême 17 correspondante du cadre de contact. Ladite portion intermédiaire 24 de lame de contact relie une portion extérieure d'extrémité 25 de lame de contact et une portion intérieure 26 de lame de contact. La portion extérieure d'extrémité 25 de lame de contact dépasse à l'extérieur de la traverse extrême 17 correspondante de cadre de contact pour constituer une broche de connexion électrique telle que la broche 11 de la figure 1. La portion intérieure 26 de lame de contact est logée à l'intérieur de la fenêtre correspondante 19, et comprend, au voisinage de son extrémité libre 36, une portion profilée de contact 13 qui fait saillie au-delà de la face principale de guidage 9.

Dans la seconde fenêtre 20 se trouve une seconde lame de contact 27, symétrique de la lame 23 par rapport au plan transversal médian du cadre de contact 8. La seconde lame de contact 27 est fixée à la seconde traverse extrême 18, et comprend une première extrémité constituant la broche de connexion électrique 12, et une portion intérieure à portion profilée de contact 14 faisant saillie au-delà de la face principale de guidage 9. L'espacement entre les portions profilées de contact 13 et 14 correspond à l'écartement entre les plages conductrices correspondantes telles que les plages 3 et 4 de la carte à puce 1.

Dans les modes de réalisation représentés, les lames de contact présentent la même forme, qui est décrite ci-après.

La portion intérieure 26 de la lame de contact 23 comprend un premier segment 28 élastiquement flexible de lame de contact, généralement approximativement parallèle au plan moyen du cadre ou à la face principale de guidage 9, et à l'écart de ladite face principale de guidage 9. Il peut être avantageux, d'un point de vue pratique, de former un premier segment 28 légèrement en oblique, s'écartant progressivement de la seconde face 10 du cadre. Le premier segment 28 de lame de contact se développe dans une première direction longitudinale à partir de la traverse extrême 17 correspondante du cadre 8. Le premier segment 28 de lame de contact se raccorde, par un pliage 29, à un second segment 30 élastiquement flexible de lame de contact, plus proche de la face principale de guidage 9, et se développant dans la direction longitudinale opposée à ladite première direction longitudinale, et comprenant ladite portion profilée de contact 13.

Le premier segment 28 de lame de contact est disposé, au repos, comme illustré sur les figures 2 ou 4, à une distance appropriée de la seconde face 10 de cadre de contact. De cette façon, en position de lecture d'une carte à puce 1, lorsque la carte à puce 1 repousse l'extrémité profilée de contact 13 vers l'intérieur de la fenêtre 19 et déforme ainsi la lame de contact 23, les deux segments 28 et 30 flexibles peuvent fléchir perpendiculairement au plan du cadre de contact, et le premier segment 28 de lame de contact reste à l'intérieur de la fenêtre correspondante 19 de cadre de contact, en retrait de ladite seconde face 10 de cadre.

On réalise ainsi une partie intérieure 26 de lame de contact qui présente une longueur totale élastiquement fléchissante égale à la longueur cumulée des deux segments 28 et 30 de lame de contact et du pliage 29. Cette longueur totale est dimensionnée de façon à obtenir une flexion élastique appropriée. La forme repliée de la partie intérieure 26 de lame de contact permet de réduire sensiblement l'encombrement en longueur de la fenêtre 19 nécessaire pour le logement de cette partie intérieure 26 de lame de contact. Il en résulte une réduction sensible de la longueur du cadre de contact.

Dans les modes de réalisation illustrés sur les figures, le cadre de contact comprend en outre une traverse intermédiaire 31, de préférence à section réduite, séparant les deux fenêtres 19 et 20 ou séries de fenêtres contenant chacune l'une des deux rangées 21 ou 22 de lames de contact.

Dans le mode de réalisation de la figure 2, la traverse intermédiaire 31 présente une section rectangulaire.

En alternative, dans le mode de réalisation de la figure 4, la traverse intermédiaire 31 présente, dans sa portion 32 adjacente à la face principale de guidage 9, une largeur L suffisante appropriée pour la manipulation et/ou le guidage de la carte à puce entre les deux fenêtres 19 et 20, et, dans sa portion 33 plus éloignée de la face principale de guidage 9, une largeur L1 réduite ou nulle, permettant le logement des pliages tels que le pliage 29.

Dans le mode de réalisation représenté sur la figure 4, la portion intermédiaire 24 de lame de contact, noyée dans la traverse extrême 17, est généralement parallèle à la face principale de guidage 9 et se raccorde par un coudage extérieur 34 à la portion extérieure d'extrémité 25 de la lame de contact, laquelle portion extérieure d'extrémité 25 est généralement coplanaire avec la seconde face 10 du cadre de contact pour former une broche de connexion soudable sur le circuit imprimé 7.

Dans le mode de réalisation de la figure 2, la portion intermédiaire 24 de lame de contact, noyée dans la traverse extrême 17, est inclinée pour se raccorder au premier segment 28 de lame de contact à l'écart de la seconde face 10 de cadre de contact, et pour se raccorder à la partie extérieure d'extrémité 25 de lame de contact au niveau de ladite seconde face 10 de cadre de contact.

Dans le mode de réalisation particulier illustré à titre d'exemple par la figure 3, le cadre de contact comprend six contacts. On pourra naturellement appliquer l'invention à la réalisation de cadres à nombre différent de contacts, par exemple huit contacts.

Un cadre de contact 8 selon la présente invention peut être utilisé dans un lecteur de carte à puce comprenant, comme illustré sur la figure 1, un cadre de contact 8 fixe, pour une lecture à frottement de la carte à puce 1 déplacée parallèlement au cadre de contact 8 comme illustré par la flèche 35.

Pour éviter que la carte à puce déforme et détériore les lames de contact lors de son introduction pour une lecture à frottement, les extrémités libres des lames de contact, telles que l'extrémité 36 de la lame de contact 23, restent en permanence à l'intérieur de la fenêtre correspondante 19, c'est-à-dire en retrait de la face principale de guidage 9.

En alternative, le cadre de contact 8 selon l'invention peut être incorporé dans un lecteur de carte à puce comprenant un cadre de contact 8 mobile et un dispositif à atterrissage pour déplacer le cadre de contact 8 perpendiculairement à son plan et l'amener contre la carte à puce 1 à lire.

Dans tous les cas, lors de son positionnement, la carte à puce 1 repousse les extrémités profilées de contact 13 et 14, les lames de contact fléchissant alors élastiquement pour assurer une pression de contact appropriée.

La présente invention n'est pas limitée aux modes de réalisation qui ont été explicitement décrits, mais elle en inclut les diverses variantes et généralisations qui sont à la portée de l'homme du métier.

## Revendications

**1 -** Cadre de contact (8) pour lecteur de carte à puce (1), comprenant au moins deux longerons latéraux (15,16) et deux traverses extrêmes (17,18) définissant une structure de cadre en matière isolante, présentant une face principale de guidage (9) et une seconde face (10) opposée, et entourant au moins une fenêtre (19,20) dans laquelle sont logées deux rangées opposées (21,22) de lames parallèles conductrices de contact (23) solidaires du cadre de contact (8), les lames de contact (23) ayant une portion intérieure (26) de lame de contact logée dans la fenêtre (19,20) et comportant une portion profilée de contact (13,14), les portions profilées de contact (13,14) faisant saillie au-delà de la face principale de guidage (9) et étant agencées pour assurer le raccordement électrique avec des plages conductrices (3,4) de la carte à puce (1), les portions intérieures (26) de lame de contact comprenant un premier segment (28) de lame de contact généralement approximativement parallèle au plan moyen du cadre de contact et à l'écart de la face principale de guidage (9), se développant dans une première direction à partir de leur extrémité solidaire du cadre de contact (8), et se raccordant par un pliage (29) à un second segment (30) de lame de contact, plus proche de la face principale de guidage (9) et se développant dans la direction opposée à ladite première direction jusqu'à ladite portion profilée de contact (13,14), caractérisé en ce que :
- chaque lame de contact (23) a une portion intermédiaire (24) de lame de contact noyée dans une traverse extrême (17) de cadre de contact, entre la portion intérieure (26) de lame de contact et une portion extérieure d'extrémité (25) de lame de contact dépassant à l'extérieur de la traverse extrême (17) pour la connexion électrique du cadre de contact,
- l'un et l'autre des premier (28) et second (30) segments de lame de contact sont élastiquement flexibles perpendiculairement au plan du cadre de contact (8),
- le premier segment (28) de lame de contact est disposé, au repos, à une distance appropriée de la seconde face (10) de cadre de contact de façon que, en position de lecture d'une carte à puce (1), le premier segment (28) de lame de contact puisse librement fléchir tout en restant à l'intérieur de la fenêtre correspondante (19,20) de cadre, en retrait de ladite seconde face (10) de cadre de contact,
- les extrémités libres (36) des seconds segments (30) de lame de contact restent en permanence à l'intérieur de la fenêtre correspondante (19,20), en retrait de la face principale de guidage (9).

**2 -** Cadre de contact selon la revendication 1, caractérisé en ce qu'il comprend une traverse intermédiaire (31), à section réduite, séparant deux fenêtres (19,20) ou deux séries de fenêtres contenant chacune l'une des deux rangées (21,22) de lames de contact.

**3 -** Cadre de contact selon la revendication 2, caractérisé en ce que la traverse intermédiaire (31) présente, dans sa portion (32) adjacente à la face principale de guidage (9), une largeur appropriée (L) pour la manipulation et/ou le guidage de la carte à puce (1) entre les deux fenêtres (19,20) et, dans sa portion (33) plus éloignée de la face principale de guidage (9), une largeur (L1) réduite ou nulle pour le logement des pliages (29).

**4 -** Cadre de contact selon l'une quelconque des revendications 1 à 3, caractérisé en ce que la portion intermédiaire (24) de lame de contact, noyée dans la partie isolante (17) de cadre, est généralement parallèle à la face principale de guidage (9) et se raccorde par un coudage extérieur (34) à la portion extérieure d'extrémité (25) de lame de contact.

**5 -** Cadre de contact selon l'une quelconque des revendications 1 à 3, caractérisé en ce que la portion intermédiaire (24) de lame de contact, noyée dans la partie isolante (17) de cadre, est inclinée pour se raccorder au premier segment (28) de lame de contact à l'écart de la seconde face (10) de cadre, et pour se raccorder à la portion extérieure d'extrémité (25) de lame de contact au niveau de ladite seconde face (10) de cadre.

**6 -** Lecteur de carte à puce, comprenant un cadre de contact fixe (8) selon l'une quelconque des revendications 1 à 5, pour une lecture à frottement de la carte à puce (1) déplacée parallèlement au cadre de contact (8).

**7 -** Lecteur de carte à puce, comprenant un cadre de contact (8) mobile selon l'une quelconque des revendications 1 à 5, et un dispositif à atterrissage pour déplacer le cadre de contact (8) perpendiculairement à son plan et l'amener contre la carte à puce (1) à lire.
